# EUROPÄISCHE PATENTSCHRIFT

(11) **EP 1 627 133 B1**
(45) Veröffentlichungstag und Bekanntmachung des Hinweises auf die Patenterteilung: **30.08.2006**
(21) Anmeldenummer: 04724286.2
(22) Anmeldetag: 30.03.2004
(51) Int. Cl.: F01L 13/00, F02D 13/02

(54) **VERFAHREN ZUM UMSCHALTEN DES HUBS VON EINLASSVENTILEN EINER BRENNKRAFTMASCHINE**
METHOD FOR CHANGING THE LIFT OF AN INLET VALVE OF AN INTERNAL COMBUSTION ENGINE
PROCEDE POUR FAIRE VARIER LA LEVEE DE SOUPAPES D'ADMISSION D'UN MOTEUR A COMBUSTION INTERNE

(30) Priorität: 15.05.2003 DE 10321881
(43) Veröffentlichungstag der Anmeldung: 22.02.2006
(73) Patentinhaber: DaimlerChrysler AG, 70567 Stuttgart (DE)
(72) Erfinder: GLOSE, Martin, 71563 Affalterbach (DE); KUDASHEV, Arkadi, 71729 Erdmannhausen (DE)
(86) Internationale Anmeldenummer: PCT/EP2004/003338
(87) Internationale Veröffentlichungsnummer: WO 2004/101959

(56) Entgegenhaltungen:
- EP-A- 0 854 273
- US-A- 5 009 203
- US-A- 5 803 029
- US-A1- 2003 005 908

## Beschreibung

Die Erfindung betrifft ein Verfahren zum Umschalten des Hubs von Einlassventilen einer Brennkraftmaschine zwischen einem Teilhub und einem Vollhub nach der im Oberbegriff von Anspruch 1 näher definierten Art (siehe US-A-5803029).

Ein gattungsgemäßes Verfahren ist aus der MTZ 61 (2002), Seiten 730 - 746 bekannt. Dabei wird mittels eines schaltbaren Tassenstößels zwischen einem inneren Stößel und einem äußeren Stößel, welche unterschiedlichen Nockenprofilen zugeordnet sind und auf das Einlassventil einwirken, umgeschaltet. Der innere Stößel bzw. Teilhubnocken ist so ausgelegt, dass er einen Hub des Einlassventils von ca. 3 mm erzeugt, wohingegen der äußere Stößel bzw. Vollhubnocken einen Einlassventilhub von ca. 12 mm erzeugt.

Bei geringem Leistungsbedarf der Brennkraftmaschine wird dabei der geringe Einlassventilhub eingestellt, wodurch eine Verbrauchsminderung und eine Reduzierung von Emissionen erreicht werden kann. Sobald der Fahrer eines Fahrzeugs, in dem die Brennkraftmaschine eingebaut ist, ein höheres Drehmoment anfordert, erfolgt eine Umschaltung auf denjenigen Stößel bzw. Nocken, der den größeren Einlassventilhub erzeugt.

Problematisch ist dabei allerdings, dass beim Umschalten zwischen dem Teilhub und dem Vollhub der Einlassventile aufgrund der sehr stark unterschiedlichen Zylinderfüllung durch den unterschiedlichen Einlassquerschnitt ein verhältnismäßig großer Drehmomentsprung entsteht, den der Fahrer als unangenehm empfinden kann.

Gemäß dem oben angegebenen Stand der Technik wird dieser Drehmomentsprung in verhältnismäßig aufwendiger Art und Weise durch eine Anpassung des Gemischs innerhalb des Zylinders, einer Veränderung des Drosselklappenwinkels und eines Zündwinkeleingriffs kompensiert. Insbesondere die Veränderung des Drosselklappenwinkels und somit die Anpassung des Frischluftmassenstroms in die Brennkraftmaschine ist jedoch ein sehr problematischer und komplexer Vorgang, der darüber hinaus nicht innerhalb eines Lastwechselspiels der Brennkraftmaschine vorgenommen werden kann.

Die US 5,009,203 beschreibt ein Verfahren zur Steuerung der Ventilumschaltung bei einer Brennkraftmaschine, bei welchem die Umschaltung derart vorgenommen werden soll, dass die Brennkraftmaschine vor und nach der Umschaltung im wesentlichen dasselbe Drehmoment abgibt. Um dies zu erreichen, wird die eingespritzte Kraftstoffmenge vor und nach dem Umschalten gemessen.

Das dort beschriebene Verfahren lässt allerdings eine unabhängige Verstellung der Einlassventilsteuerzeit und des Einlassventilhubs nicht zu, so dass eine verhältnismäßig starre Umschaltung gegeben ist.

Es ist, ausgehend von dem in der MTZ 61 (2002) beschriebenen Stand der Technik, Aufgabe der vorliegenden Erfindung, ein Verfahren zum Umschalten des Hubs von Einlassventilen einer Brennkraftmaschine zu schaffen, mittels welchem trotz einer großen Variabilität bezüglich der Steuerzeit und des Ventilhubs eine einfache und innerhalb einer möglichst kurzen Zeit durchzuführende Umschaltung zwischen einem Teilhub und einem Vollhub der Einlassventile gegeben ist.

Erfindungsgemäß wird diese Aufgabe durch die in Anspruch 1 genannten Merkmale gelöst.

Die Nockenwelle wird also erfindungsgemäß in eine Winkelposition gebracht, in welcher das Schluckvermögen der Brennkraftmaschine beim Einsatz der Teilhubnocken im wesentlich mit dem Schluckvermögen der Brennkraftmaschine beim Einsatz der Vollhubnocken übereinstimmt. Mit anderen Worten: Das Schluckvermögen der Brennkraftmaschine beim Einsatz der Vollhubnocken wird dem Schluckvermögen der Brennkraftmaschine beim Einsatz der Teilhubnocken angeglichen. Diese Verstellung der Nockenwelle, welche beispielsweise mit gewöhnlichen kontinuierlichen Nockenwellenverstellern vorgenommen werden kann, wird vor dem Umschalten der Einlassventile von Teilhub auf Vollhub bzw. umgekehrt, von Vollhub auf Teilhub, vorgenommen, wodurch ein Drehmomentsprung beim anschließenden Umschalten vermieden werden kann. Es ist hierzu lediglich erforderlich, das Profil und die relative Lage über dem Kurbelwinkel der Teilhubnocken und Vollhubnocken so auszuführen, dass das beschriebene Ergebnis, nämlich eine Übereinstimmung des Schluckvermögens der Brennkraftmaschine unabhängig von der Verwendung der Teilhubnocken oder der Vollhubnocken, erreicht werden kann. Dieses Verhältnis der Vollhubnocken zu den Teilhubnocken ist also durch das Ergebnis, nämlich durch das Schluckvermögen der Brennkraftmaschine, welches in erster Näherung proportional zu dem von der Brennkraftmaschine abgegebenen Drehmoment ist, definiert und kann durch geeignete Verfahren vorausberechnet werden.

Der Verlauf des Nockenwellen-Phasenwinkels über der Drehzahl und der Last der Brennkraftmaschine beim Einsatz der Teilhubnocken bzw. der Vollhubnocken sind dabei in einem Kennfeld innerhalb eines Steuergerätes der Brennkraftmaschine abgelegt. Die beschriebene dynamische Umschaltung zwischen den Vollhubnocken und den Teilhubnocken erfolgt dann, indem das Steuergerät auf das abgelegte Kennfeld bzw. auf die darin abgelegten Kennlinien zurückgreift und die mechanische Umschaltung veranlasst. Hierzu ist es vorteilhafterweise nicht erforderlich, die Stellung der Drosselklappe zu verändern, also eine zeitliche Vorsteuerung mittels der Drosselklappe vorzunehmen, wodurch das erfindungsgemäße Verfahren mit erheblich weniger Aufwand als aus dem Stand der Technik bekannte Verfahren durchgeführt werden kann. Dabei ist es möglich, unabhängig voneinander den Hub und die Steuerzeiten der Einlassventile zu verstellen, wodurch das erfindungsgemäße Verfahren erst ermöglicht wird.

In besonders einfacher und vorteilhafter Art und Weise lässt sich die Übereinstimmung des Schluckvermögens der Brennkraftmaschine unter Verwendung der beschriebenen Einlaß-Nockenprofile durch eine Verschiebung der Schließzeit der Einlassventile in Richtung später Einlassschluss erreichen. Wenn die Schließzeit der Einlassventile in Richtung später Einlassschluss verstellt wird, so führt dies zu einem geringeren Schluckvermögen der mit den Vollhubnocken betriebenen Brennkraftmaschine, da die angesaugte Luft zu einem gewissen Teil wieder aus den Zylindern ausgeschoben wird, bevor die Einlassventile schließen. Bei entsprechender Auslegung der Teilhubnocken im Verhältnis zu den Vollhubnocken mit der Folge eines größeren prozentualen Verbleibs der angesaugten Frischluft bei Verwendung des Teilhubnockens lässt sich damit eine Übereinstimmung des jeweiligen Schluckvermögens erreichen.

Weitere vorteilhafte Ausgestaltungen und Weiterbildungen der Erfindung ergeben sich aus den restlichen Unteransprüchen sowie aus dem nachfolgend anhand der Zeichnung prinzipmäßig dargestellten Ausführungsbeispiel.

Dabei zeigen:
- Fig. 1: Eine zur Steuerung von Einlassventilen vorgesehene Nockenwelle mit Teilhubnocken und Vollhubnocken; und
- Fig. 2: Ein Diagramm, welches den Verlauf verschiedener Drehmomente einer Brennkraftmaschine über der Drehzahl derselben darstellt.

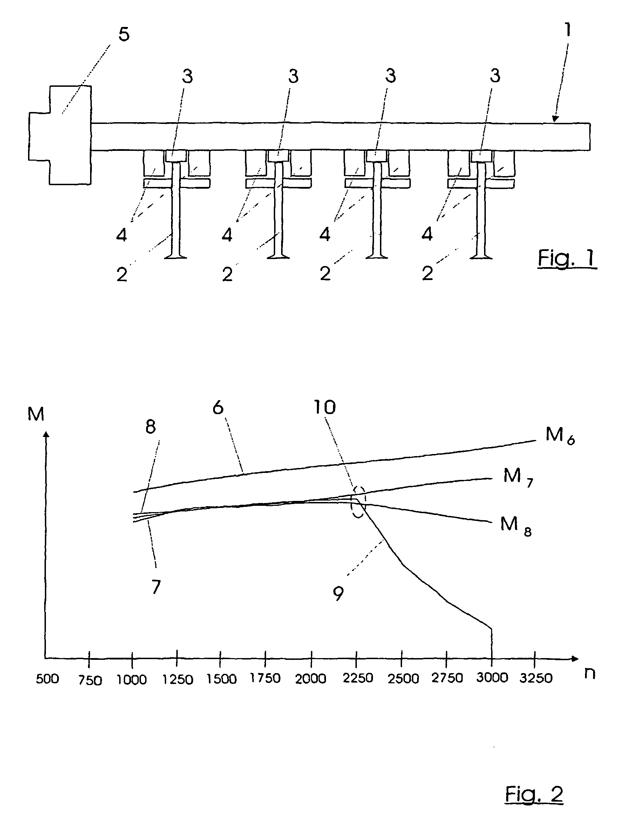

Fig. 1 zeigt in sehr schematischer Darstellung eine Nockenwelle 1 einer in ihrer Gesamtheit nicht dargestellten Brennkraftmaschine. Die Nockenwelle 1 dient zur Ansteuerung mehrerer Einlassventile 2, welche in an sich bekannter Weise die Einströmung von Luft bzw. eines Kraftstoff-Luft-Gemischs zu ebenfalls nicht dargestellten Zylindern der Brennkraftmaschine steuern. Im vorliegenden Fall handelt es sich dabei um einen V8-Motor mit zwei Nockenwellen 1 für insgesamt acht oder sechzehn Einlassventile 2. Selbstverständlich weist die Brennkraftmaschine auch Auslassventile und eine zur Steuerung derselben vorgesehene Nockenwelle auf, diese sind jedoch aus Übersichtlichkeitsgründen nicht dargestellt.

Um einen unterschiedlichen Hub der Einlassventile 2 erreichen zu können, weist die Nockenwelle 1 mehrere Teilhubnocken 3 und mehrere Vollhubnocken 4 auf, zwischen denen eine Umschaltung stattfinden kann, um sie abwechselnd in Eingriff mit den Einlassventilen 2 zu bringen. Wenn die Teilhubnocken 3 in Eingriff mit den Einlassventilen 2 sind, so beträgt deren Hub ca. 3 mm, bei Eingriff der Vollhubnocken 4 mit den Einlassventilen 2 beträgt der Hub derselben ca. 12 mm. Die Umschaltung zwischen den Teilhubnocken 3 und den Vollhubnocken 4 ist für sich beispielsweise aus der MTZ 61 (2000), Seiten 730 bis 746 bekannt und wird daher im folgenden nicht näher erläutert. Die Teilhubnocken 3 und die Vollhubnocken 4 sind dabei jeweils paarweise einem der Einlassventile 2 zugeordnet, wobei die Vollhubnocken 4 im vorliegenden Fall zweigeteilt sind und sich außerhalb der Teilhubnocken 3 befinden.

Der Sinn dieser Umschaltung zwischen den Teilhubnocken 3 und den Vollhubnocken 4 liegt darin, bei geringem Leistungsbedarf der Brennkraftmaschine den geringen Einlassventilhub durch die Teilhubnocken 3 einzustellen, wodurch eine Verbrauchsminderung und eine Reduzierung von Emissionen erreicht werden kann. Wenn höhere Drehmomente angefordert werden, erfolgt eine Umschaltung auf den größeren Einlassventilhub mittels der Vollhubnocken 4.

An einem Ende der Nockenwelle 1 ist eine stark vereinfacht dargestellte Verstelleinrichtung 5 vorgesehen, welche in der Lage ist, die Winkelposition bzw. den Phasenwinkel der Nockenwelle 1 zu verstellen, und auf diese Weise dafür sorgt, dass die Steuerzeiten der Einlassventile 2 verändert werden können. Die Funktionsweise der Verstelleinrichtung 5 ist ebenfalls aus dem Stand der Technik bekannt und wird im folgenden nicht näher beschrieben.

In Fig. 2 ist ein Diagramm dargestellt, in welchem verschiedene Kennlinien eines Drehmoments M über einer Drehzahl n der Brennkraftmaschine aufgetragen sind. Dabei ist zu beachten, dass das Drehmoment M in erster Näherung proportional zu dem Schluckvermögen der Brennkraftmaschine, also dem der Brennkraftmaschine zur Verfügung gestellten Luftvolumen bezogen auf den Hubraum derselben, ist, sodass die dargestellten Kurven im wesentlichen auch den Verlauf des Schluckvermögens der Brennkraftmaschine über der Drehzahl n verkörpern. Die Höhe des Drehmoments M ist dabei nicht angegeben, da dieses naturgemäß stark von der Brennkraftmaschine abhängt. Auch die angegebenen Werte für die Drehzahl n sind lediglich als beispielhaft anzusehen.

Durch Verdrehen der gesamten Nockenwelle 1 mittels der Verstelleinrichtung 5 werden die Steuerzeiten der Einlassventile 2 derart eingestellt, dass die dynamische Umschaltung zwischen den Teilhubnocken 3 und den Vollhubnocken 4 an Punkten innerhalb des Kennfelds der Brennkraftmaschine durchgeführt wird, in welchen das Schluckvermögen der Brennkraftmaschine beim Einsatz der Teilhubnocken 3 im wesentlichen mit dem Schluckvermögen der Brennkraftmaschine beim Einsatz der Vollhubnocken 4 übereinstimmt. Dies führt dazu, dass dieses Umschalten für den Fahrer eines Kraftfahrzeugs, in dem die Brennkraftmaschine eingebaut ist, nicht wahrnehmbar ist und somit nicht als störend empfunden werden kann. Es wird also zunächst eine geeignete relative Winkellage der Teilhubnocken 3 zu den Vollhubnocken 4 festgelegt und anschließend ein bestimmter Winkel der Nockenwelle 1 mittels der Verstelleinrichtung 5 eingestellt.

Hierbei zeigt die mit "6" bezeichnete Kennlinie bzw. Kurve das maximale Drehmoment M₆, welches sich bei Vollhub, also wenn die Vollhubnocken 4 im Einsatz bzw. in Eingriff mit den Einlassventilen 2 sind, und bei füllungsoptimalen Steuerzeiten der Einlassventile 2 ergibt. Beispielsweise kann hierbei die Verstelleinrichtung 5 die Nockenwelle 1 derart verstellen, dass die Einlassventile 2 im Nockenwellenversteller-Frühanschlag von 42° früher schließen als im Nockenwellenversteller-Spätanschlag. Der Term "füllungsoptimale Steuerzeiten" kann selbstverständlich von Brennkraftmaschine zu Brennkraftmaschine unterschiedlich sein und ist für einen Fachmann durchaus verständlich.

Die mit "7" bezeichnete Kurve zeigt das sich einstellende Drehmoment M₇ bei Verwendung der Vollhubnocken 4 für die Einlassventile 2, wobei allerdings die Steuerzeiten der Einlassventile 2 derart verändert werden, dass ein Teil der eingeleiteten Luft bzw. des eingeleiteten Kraftstoff-Luft-Gemischs wieder aus den Zylindern ausgestoßen wird, sodass der Liefergrad, also das Ergebnis aus angesaugter minus ausgestoßener Luftmasse, verringert wird. Hierzu wird im vorliegenden Fall die Nockenwelle 1 mittels der Verstelleinrichtung 5 in Richtung später Einlassschluss gestellt.

Die mit "8" bezeichnete Kurve zeigt das maximale Drehmoment M₈ unter Einsatz der Teilhubnocken 3 bei füllungsoptimalen Steuerzeiten der Einlassventile 2. Es ist erkennbar, dass die Kurve 8 sehr nah zu der Kurve 7 verläuft bzw. diese sogar mehrmals schneidet. Dies wird durch die oben unter Bezugnahme auf die Kurve 7 beschriebene Verschiebung der Steuerzeiten für die Vollhubnocken 4 erreicht, da sich durch den Ausstoß der eingeleiteten Luft bzw. des eingeleiteten Kraftstoff-Luft-Gemischs aus dem Zylinder das Schluckvermögen und somit das Drehmoment der Brennkraftmaschine verringert. An Punkten, an denen die Kurve 8 oberhalb der Kurve 7 liegt, kann durch Verdrehen der Nockenwelle 1 vor einer Umschaltung die Steuerzeit der Vollhubnocken 4 in geringem Maße optimiert und damit das Drehmoment erhöht werden, sodass erreicht werden kann, dass sich die Kurven 7 und 8 schneiden.

Wenn dies, wie im vorliegenden Fall, so aufeinander abgestimmt ist, dass das Schluckvermögen bei Verwendung der Vollhubnocken 4 im Bereich bzw. teilweise geringfügig unterhalb und teilweise geringfügig oberhalb des Schluckvermögens der Teilhubnocken 3 liegt, so kann ein Umschalten zwischen den Teilhubnocken 3 und den Vollhubnocken 4 im wesentlichen ohne Drehmomentsprung durchgeführt werden.

Hierzu stellt die mit "9" bezeichnete Kurve eine Umschaltlinie dar, auf welcher ein Umschaltvorgang von den Teilhubnocken 3 auf die Vollhubnocken 4 oder umgekehrt durchgeführt werden kann. Bis zu einem mit "10" bezeichneten Punkt bei einer Drehzahl n von ca. 2250 1/min ist diese Umschaltung mit einem Drehmomentsprung von weniger als 15 Nm, allgemein in einem Bereich von weniger als 5%, möglich und wird von dem Steuergerät der Brennkraftmaschine automatisch, in Abhängigkeit von in dem Steuergerät ablegbaren Umschaltpunkten im Betriebskennfeld eingeleitet.

Bei einer Drehzahl n oberhalb des mit "10" bezeichneten Punktes wird die zugeführte Luftmasse mittels einer nicht dargestellten Drosselklappe oder ähnlichem im Ansaugbereich der Brennkraftmaschine begrenzt, um durch diese Reduzierung der Luftmasse bzw. des Luftvolumens eine Verringerung der Differenz der durch die Teilhubnocken 3 bzw. die Vollhubnocken 4 erzeugten Drehmomente M bis auf ca. 15 Nm zu erreichen. Die Umschaltlinie zwischen den Teilhubnocken 3 und den Vollhubnocken 4, also zwischen Teilhub und Vollhub der Einlassventile 2, wird in diesem Fall also durch Drosselung der zugeführten Luft verschoben. Dies wird deutlich durch das Abfallen der Linie 9 ab der Drehzahl n von 2250 1/min.

Hierdurch wird auch ersichtlich, dass unterhalb der Umschaltlinie 9 innerhalb des über dem Drehmoment M und der Drehzahl n aufgespannten Kennfeldes an einer beliebigen Stelle umgeschaltet werden kann, wobei die oben näher beschriebenen, für die momentenneutrale Umschaltung notwendigen Einlassnockenwellen-Phasenwinkel, welche in in dem Steuergerät implementierten Kennfeldern über Last und Drehzahl abgelegt sind, vorausgesetzt werden müssen.

## Patentansprüche

1. Verfahren zum Umschalten des Hubs von Einlassventilen einer Brennkraftmaschine zwischen einem Teilhub und einem Vollhub, wobei der Hub der Einlassventile von wenigstens einer Nockenwelle, welche jeweilige, abwechselnd auf das Einlassventil wirkende Teilhubnocken und Vollhubnocken aufweist, **dadurch** gesteuert wird, dass die Teilhubnocken oder die Vollhubnocken in Eingriff mit den Einlassventilen gebracht werden, und wobei die Steuerzeiten sämtlicher der Nockenwelle zugeordneter Einlassventile durch Verdrehung der Nockenwelle um einen bestimmten Winkel verstellt werden,
**dadurch gekennzeichnet ,**
**dass** durch Verdrehen der gesamten Nockenwelle (1) die Steuerzeiten der Einlassventile (2) derart eingestellt werden, dass die Umschaltung zwischen den Teilhubnocken (3) und den Vollhubnocken (4) an Punkten innerhalb eines Kennfeldes der Brennkraftmaschine durchgeführt wird, in welchen das Schluckvermögen der Brennkraftmaschine beim Einsatz der Teilhubnocken (3) im wesentlichen mit dem Schluckvermögen der Brennkraftmaschine beim Einsatz der Vollhubnocken (4) übereinstimmt.

2. Verfahren nach Anspruch 1,
**dadurch gekennzeichnet ,**
**dass** die Übereinstimmung des Schluckvermögens der Brennkraftmaschine beim Einsatz der Teilhubnocken (3) und beim Einsatz der Vollhubnocken (4) durch eine Verschiebung der Schließzeit der Einlassventile (2) in Richtung später Einlassschluss erreicht wird.

3. Verfahren nach Anspruch 1 oder 2,
**dadurch gekennzeichnet ,**
**dass** die Umschaltung innerhalb einer Differenz des Schluckvermögens der Brennkraftmaschine von ca. 5 % durchgeführt wird.

## Claims

1. Method for changing the lift of inlet valves of an internal combustion engine between a partial lift and a full lift, the lift of the inlet valves being controlled by at least one camshaft, which comprises respective partial lift cams and full lift cams acting alternately on the inlet valve, by the partial lift cams or the full lift cams being brought into engagement with the inlet valves, and the control times of all the inlet valves assigned to the camshaft being adjusted by rotating the camshaft by a given angle, **characterized in that** the control times of the inlet valves (2) are set in such a way by rotating the entire camshaft (1) that the changeover between the partial lift cams (3) and the full lift cams (4) is carried out at points within a characteristic map of the internal combustion engine at which the suction capacity of the internal combustion engine when using the partial lift cams (3) corresponds essentially to the suction capacity of the internal combustion engine when using the full lift cams (4).

2. Method according to Claim 1, **characterized in that** the correspondence of the suction capacity of the internal combustion engine when using the partial lift cams (3) and when using the full lift cams (4) is achieved by shifting the closing time of the inlet valves (2) toward late inlet closing.

3. Method according to Claim 1 or 2, **characterized in that** the changeover is carried out within a difference of the suction capacity of the internal combustion engine of roughly 5%.

## Revendications

1. Procédé pour faire commuter la levée de soupapes d'admission d'un moteur à combustion interne entre une levée partielle et une levée complète, la levée des soupapes d'admission étant commandée par au moins un arbre à cames qui présente des cames de levée partielle et des cames de levée complète respectives agissant en alternance sur la soupape d'admission, par le fait que les cames de levée partielle ou les cames de levée complète sont amenées en engagement avec les soupapes d'admission, et les temps de commande de toutes les soupapes d'admission associées à l'arbre à cames sont réglés par rotation de l'arbre à cames d'un angle déterminé,
**caractérisé en ce que**
par rotation de la totalité de l'arbre à cames (1), les temps de commande des soupapes d'admission (2) sont réglés de telle sorte que la commutation entre les cames à levée partielle (3) et les cames à levée complète (4) est effectuée à des points à l'intérieur d'un champ caractéristique du moteur à combustion interne, auxquels la capacité d'aspiration du moteur à combustion interne lors de l'utilisation des cames à levée partielle (3) coïncide sensiblement à la capacité d'aspiration du moteur à combustion interne lors de l'utilisation des cames à levée complète (4).

2. Procédé selon la revendication 1,
**caractérisé en ce que**
la coïncidence entre la capacité d'aspiration du moteur à combustion interne lors de l'utilisation des cames à levée partielle (3) et celle lors de l'utilisation des cames à levée complète (4) est obtenue par un décalage du temps de fermeture des soupapes d'admission (2) dans le sens d'un retardement de la fermeture d'admission.

3. Procédé selon la revendication 1 ou 2,
**caractérisé en ce que**
la commutation est effectuée à l'intérieur d'une différence des capacités d'aspiration du moteur à combustion interne d'environ 5 %.
